Europäisches Patentamt

European Patent Office

Office européen des brevets

(19)

(11) Publication number: **0 041 847**
**B1**

# EUROPEAN PATENT SPECIFICATION

(12)

(45) Date of publication of patent specification: **05.10.83**

(21) Application number: **81302507.9**

(22) Date of filing: **05.06.81**

(51) Int. Cl.³: **H 02 K 9/28,** H 02 K 9/26,
H 02 K 5/12

(54) Generator for a motor vehicle.

(30) Priority: **10.06.80 JP 81990/80**

(43) Date of publication of application:
**16.12.81 Bulletin 81/50**

(45) Publication of the grant of the patent:
**05.10.83 Bulletin 83/40**

(84) Designated Contracting States:
**DE FR GB**

(56) References cited:
**DE - A - 2 129 724**
**DE - A - 2 259 900**
**DE - A - 2 448 522**
**FR - A - 2 091 371**
**US - A - 1 385 995**
**US - A - 1 744 263**
**US - A - 1 972 315**
**US - A - 2 306 724**
**US - A - 2 990 105**

(73) Proprietor: **MITSUBISHI DENKI KABUSHIKI
KAISHA**
**2-3, Marunouchi 2-chome Chiyoda-ku
Tokyo 100 (JP)**

(72) Inventor: **Iwaki, Yoshiyuki**
**946-158, Mitachi
City of Himeji Hyogo Prefecture (JP)**
Inventor: **Goto, Hitoshi**
**1347, Shikatacho Hiroo
City of Kakogawa Hyogo Prefecture (JP)**

(74) Representative: **Messulam, Alec Moses et al,
MARKS & CLERK 57/60 Lincoln's Inn Fields
London WC2A 3LS (GB)**

Courier Press, Leamington Spa, England.

Generator for a motor vehicle

This invention relates to a generator for the charging system of a motor vehicle.

In a conventional generator such as an alternator for motor vehicles, salt water and other sources of contamination can penetrate into the interior through vent holes provided for cooling air and can reach the brush. Thus, the brushes have been eroded or corroded and have stuck to the interior of the brush holders. This has resulted in the problem that the brushes have to be in complete sliding engagement with the slip rings or commutator as the case may be.

The object of the present invention is to provide a generator in which the brushes are protected against contamination by salt water entering the interior of the generator through the vent holes.

According to the present invention, there is provided a generator for a motor vehicle, comprising a housing having an end plate provided with vent holes, a brush holder carrying a set of brushes, and arranged adjacent the inner surface of the end plate, and a labyrinth seal for protecting the brushes characterised in that a plurality of baffles are disposed in staggered relationship on opposed faces of the end plate and the brush holder to form a static labyrinth therebetween, and the said labyrinth is filled with a water-proofing lubricant.

The invention will now be described further by way of example, with reference to the accompanying drawings, in which:

Figure 1 is an aerial section of the rear portion of a conventional generator for a motor vehicle.

Figure 2 is a similar view of a generator of the invention.

Figure 3 is a fragmental front plan view of the end plate shown in Figure 2 and viewed on the line III—III of Figure 2 with the bearing as shown in Figure 2 omitted; and

Figure 4 is a front plan view, partly in section of the brush holder shown in Figure 2 as viewed on the line IV—IV of Figure 2.

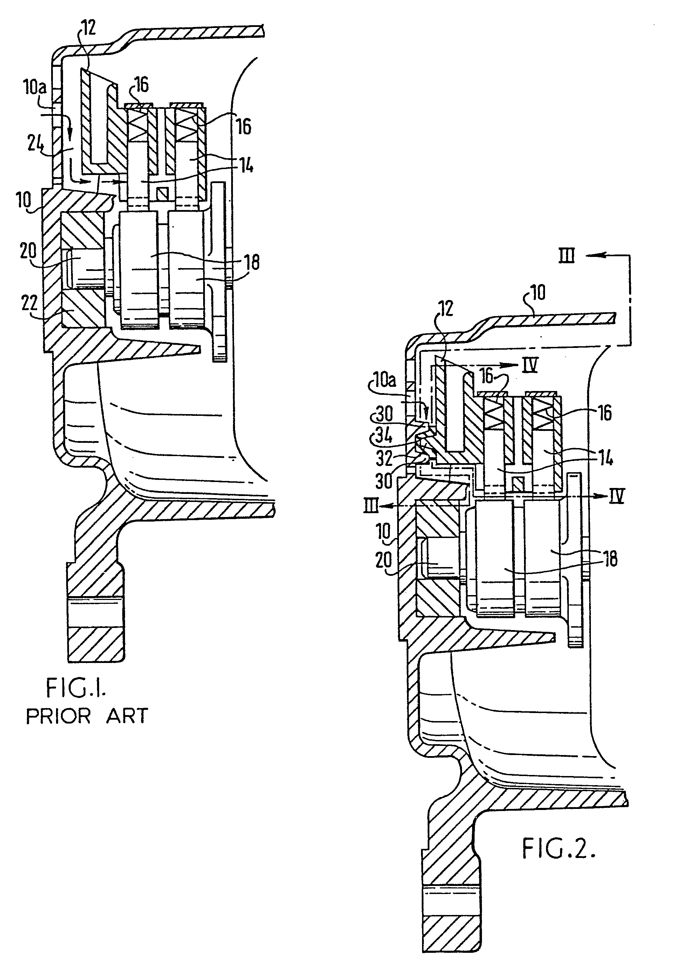

Referring now to Figure 1 of the drawings, there is illustrated a rear portion of a conventional generator for the charging system of a motor vehicle. The arrangement illustrated comprises a rear end plate 10 having a flat end wall provided on the upper portion as viewed in Figure 1 with a plurality of vent holes 10a and a brush holder 12 suitably fixed to the end plate 10 and formed into a unitary structure with an electronic voltage regulator (not shown). The brush holder 12 is shown in Figure 1 as having a pair of brushes 14 disposed in spaced parallel relationship and slidable in the brush holder 12 in the radial direction of the generator. Also disposed in the brush holder 12 is a pair of springs 16 tending normally to push the brushes 14 radially inwardly until the brushes 14 slidably engage with respective slip rings 18 mounted on and electrically isolated from a motor shaft 20 having one end journaled in a bearing 22 disposed centrally on the inner surface of the end plate 10. As will be well known, the slip rings 18 serve to conduct electric power between the stator and the rotor of the generator.

The brush holder 12 is located near to the vent holes 10a to form a space 24 between the brush holder 12 and the flat end wall of the end plate 10. The space 24 communicates with vent holes 10a and extends in an unobstructed path as far as the brushes 14 and the slip rings 18.

In the arrangement of Figure 1, salt water or other source of contamination can penetrate into the inside of the end plate 10 through the vent holes 10a along with cooling air and can pass through the space 24 formed between the brush holder 12 and the rear bracket 10 until they reach the brushes 14. As a result, in known generators the brushes 14 have been eroded or corroded causing the brushes to stick to the interior of the brush holder 12. This has resulted in the problem that the brushes have to be in complete sliding engagement with the slip rings 18.

Referring to Figure 2 wherein like reference numerals designate like components to those shown in Figure 1, there is illustrated one embodiment according to the charging generator of the present invention for use in motor vehicles. The arrangement illustrated differs from that shown in Figure 1 in that in Figure 2, the space 24 includes one portion formed into a labyrinth which is filled with a water-proofing lubricant.

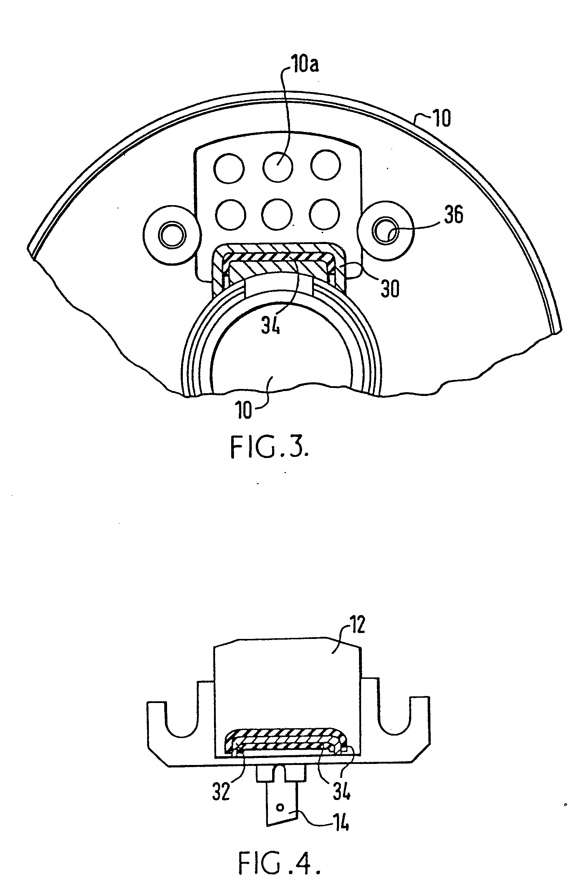

As shown in Figure 2, a pair of protuberances or baffles 30 with the flat tops are disposed in space parallel relationship on the inner surface of the end wall of the end plate 10 below the vent holes 10a opposite the radially inner portion of the brush holder 12 with respective clearances formed therebetween. As shown best in Figure 3, the baffles 30 define between them a slot in the form of an inverted U.

A further baffle 32 with a flat top is disposed on the surface of the brush holder 12 facing the end plate 10 and extends into the slot described above. As shown best in Figure 4, the baffle 32 is also in the form of an inverted U. The baffle 32 is staggered relative to the baffles 30 to define a labyrinth or sinuous path in the space 24 between the adjacent opposite portions of the rear plate 10 and the brush holder extending from the vent holes 10a and the brushes 14.

The labyrinth is filled with a water-proofing lubricant such as a grease 34.

Figure 3 shows also a pair of screw threaded holes 36 serving to mount the brush holder 12 on the rear bracket 10.

In the arrangement shown in Figures 2, 3 and 4, the labyrinth formed as described above makes it difficult for brine or the like entering through the vent holes 10a to reach the brushes 14 and the slip rings 18. In addition, the grease 34 filling the labyrinth repels the salt water to prevent it from passing toward the brushes 14 and the slip rings 18 by the action of the surface tension.

From the foregoing, it is seen that the present invention provides simple means of preventing contamination of the brushes and brush holder by baffling the path connecting the brushes to the vent holes. The filled labyrinth effectively prevents salt water entering through the vent holes from reaching the brushes and slip rings.

While the invention has been illustrated and described in conjunction with a single preferred embodiment thereof it is to be understood that numerous changes and modifications may be resorted to without departing from the scope of the appended claim. For example, the end plate may be provided with a different number of baffles from that illustrated and the brush holder may likewise be provided with more than one baffle. In the latter case the number of the baffles on the end plate should preferably be larger than on the brush holder by one.

## Claim

A generator for a motor vehicle, comprising a housing having an end plate (10) provided with vent holes (10a), a brush holder (12) carrying a set of brushes (14) and arranged adjacent the inner surface of the end plate (10), and a labyrinth seal for protecting the brushes, characterised in that a plurality of baffles (30, 32) are disposed in staggered relationship on opposed faces of the end plate (10) and the brush holder (12) to form a static labyrinth therebetween, and the said labyrinth is filled with a water-proofing lubricant (34).

## Revendication

Générateur pour véhicule à moteur, comprenant un bâti ayant une plaque d'extrémité (10) munie de trous d'aération (10a), un support de balais (12) supportant un jeu de balais (14) et adjacent à la surface interne de la plaque d'extrémité (10), et un labyrinthe étanche pour protéger les balais, caractérisé en ce qu'une pluralité de chicanes (30, 32) sont entrelacées les unes par rapport aux autres sur les faces en vis-à-vis de la plaque d'extrémité (10) et du support de balais (12) pour former entre elles un labyrinthe statique, et ledit labyrinthe est rempli avec un lubrifiant imperméable à l'eau (34).

## Patentansprüch

Generator für ein Kraftfahrzeug, bestehend aus einem Gehäuse mit einer Abschlußwand (10), die mit Lüftungsöffnungen (10a) versehen ist, einem Bürstenhalter (12), der einen Satz Bürsten (14) trägt und neben der Innenseite der Abschlußwand (10) angeordnet ist, sowie einer Labyrinthdichtung zum Schutz der Bürsten, dadurch gekennzeichnet, daß eine Mehrzahl von Drosseln (30, 32) in gegenseitig versetzter Form an einander gegenüberstehenden Oberflächen der Abschlußwand (10) und des Bürstenhalters (12) zur Bildung einer zwischen diesen stillstehenden Labyrinthdichtung angeordnet ist, und daß diese Labyrinthdichtung mit einem wasserabdichtenden Schmiermittel (34) gefüllt ist.

FIG.I.
PRIOR ART

FIG.2.

FIG.3.

FIG.4.